# EUROPEAN PATENT SPECIFICATION

(11) **EP 2 841 852 B1**
(45) Date of publication and mention of the grant of the patent: **23.10.2019**
(21) Application number: 12875412.4
(22) Date of filing: 23.04.2012
(51) Int. Cl.: F24C 15/20, B01D 53/00, B01D 53/44

(54) **KITCHEN CANOPY WITH DEGREASER UNIT**
KÜCHENHAUBE MIT ENTFETTUNGSEINHEIT
HOTTE DE CUISINE AVEC UNITÉ DE DÉGRAISSAGE

(43) Date of publication of application: 04.03.2015
(73) Proprietor: ProAir Oy Ltd, 10210 Inkoo (FI)
(72) Inventor: HEINOVAARA, Jari, FI-37180 Sarkola (FI)
(74) Representative: Berggren Oy, Tampere
(86) International application number: PCT/FI2012/050399
(87) International publication number: WO 2013/160517

(56) References cited:
- EP-A1- 1 621 245
- EP-A1- 2 100 624
- FR-A1- 2 739 792
- GB-A- 1 293 985
- JP-A- H05 157 305
- JP-A- 2004 211 911
- US-A1- 2002 157 661
- US-A1- 2006 219 235
- US-A1- 2008 135 041
- US-A1- 2009 074 609

## Description

### Field of the Invention

The present invention relates to a kitchen canopy with degreaser unit.

### Background of the Invention

Several kinds of exhaust systems are used especially in commercial kitchens for reducing fire risk, improving level of hygiene and removing odours and the smell of cooking. In commercial kitchens, for example, in cruisers and restaurants, there may be a number of cooking units and some of them, for example, broilers and fryers, produce considerable quantities of cooking exhaust. The exhaust system can be, for example, an ultraviolet light system for removing grease, smoke, fumes and moisture rising from cooking units. Ultraviolet removal devices are typically disposed inside the ventilator systems in the flow path of the cooking exhaust for removing particles efficiently. In use ultraviolet lamps gather grease and other particulates and thus extract grease less effectively. To assure efficient removing of grease, smoke, fumes and moisture ultraviolet light systems need to be more powerful or they need to be washed regularly, which demands integrated washing systems or removing of removal devices for cleaning thus causing breaks in cooking and extra work.

US20080135041 discloses ventilator assembly for removing contaminants in cooking exhaust that includes at least one lamp mounted in an easily accessible location, and that provides an adequate amount of radiation in an air flow. A wash system is arranged, which periodically cleans the lamps.

Another kitchen canopy comprising ultraviolet lamps is described in JP 2004-211911A.

There is, therefore, a need for a solution that more efficiently extract grease particulates.

### Summary of the Invention

According to the invention, there is provided a kitchen canopy comprising a hood, an exhaust air flow duct that is connected to said hood and at least one degreaser unit that is arranged inside the hood on a side of an opening of said exhaust air flow duct, and wherein said degreaser unit comprises at least one ultraviolet source for generating ultraviolet radiation, and wherein the solid angle of said radiation is at least 3π steradians.

According to an embodiment, size of said at least one ultraviolet source is such that it reaches its full radiating capacity in thirty minutes or less. According to an embodiment, said at least one degreaser unit comprises four u-shaped ultraviolet-C sources. According to an embodiment, said at least one ultraviolet source is a one-pieced circular ultraviolet-C source. According to an embodiment, the degreaser unit comprises at least two imbricated and elongated UV-C sources. According to an embodiment, said at least one ultraviolet source is one-pieced rectangular UV-C source. According to an embodiment, said at least one degreaser unit is fixed to a back wall of the hood. According to an embodiment, said at least one degreaser unit is fixed to a ceiling of the hood. According to an embodiment, said at least one degreaser unit is fixed to a side wall of the hood. According to an embodiment, said at least one ultraviolet source further generates OH-radicals for removing impurities from the air flow. According to an embodiment, wires of said at least one degreaser unit are suitable to run through wall or ceiling of the kitchen canopy and connected to driving electronics outside the hood.

### Description of the Drawings

In the following, various embodiments of the invention will be described in more detail with reference to the appended drawings, in which
- Fig. 1: shows a kitchen canopy with a degreaser unit according to an embodiment of the invention;
- Fig. 2: shows a kitchen canopy with degreaser units according to an embodiment of the invention;
- Fig. 3: shows a kitchen canopy with degreaser units according to an embodiment of the invention;
- Fig. 4: shows a kitchen canopy with degreaser units according to an embodiment of the invention;
- Fig. 5: shows a kitchen canopy with degreaser units according to an embodiment of the invention;
- Fig.6: shows a degreaser unit with four UV-C sources according to an embodiment of the invention;
- Fig. 7: shows a hood of a kitchen canopy with degreaser units according to an embodiment of the invention;
- Fig. 8: shows a hood of a kitchen canopy with degreaser units according to an embodiment of the invention;
- Fig. 9: shows a kitchen canopy with a degreaser unit according to an embodiment of the invention shown in its environment of use; and
- Fig. 10: shows a kitchen canopy with a degreaser unit according to an embodiment of the invention shown in its environment of use.

### Detailed Description of the Embodiments

Kitchen canopies i.e. kitchen ventilator systems typically include a hood mounted above the cooking devices, such as, stoves, broilers and fryers for capturing cooking exhaust, especially organic contaminants such as grease, and a duct for outgoing air flow. Hoods typically include an exhaust air duct above the cooking units for capturing the cooking exhaust and a degreaser unit comprising at least one ultraviolet (UV) C lamp i.e. UV-C source, that radiates ultraviolet-C radiation and produces ozone, O₃, and OH-radicals for reducing the binding of grease molecules of the cooking exhaust on the walls and ceiling of the hood. The UV-C source may be, for example, low pressure mercury-vapor discharge lamp.

Degreaser units are used for extracting and removing grease from an air flow comprising cooking exhaust. By UV-C radiation and ozone of the degreaser unit, the organic contaminants, such as grease, may be split into shorter grease molecule chains and a part of them may break down into carbon dioxide and water. Because of the splitting and breaking, the grease molecules may no longer stick onto surfaces of walls or ceiling of the hood. Instead, the fat molecules exit with the outgoing air flow through the duct from the hood. Additionally, the UV-C source, the ozone and OH-radicals may also enable the removal of both odours and the smell of cooking.

A degreaser unit comprising at least one ultraviolet-C source needs to be positioned inside the hood of the ventilator system to permit adequate exposure of ultraviolet-C radiation to the cooking exhaust and to avoid user exposure to a large amount of ultraviolet-C radiation. Ultraviolet-C radiation with -254 nm wavelength is extremely damaging to all biological tissues and thus makes UV-C sources biocidal. Ozone, O₃, produced by UV-C sources is also an extremely toxic gas for humans.

However, when a degreaser unit is positioned in a path of an air flow flowing through a kitchen hood into an exhaust air duct opening, the degreaser unit exposed to cooking exhaust of the air flow. Because of exposure to cooking exhaust of the air flow, grease and/or other cooking exhaust accumulates on the surface of the sources. This will rapidly reduce their UV-C output, which reduces extracting and removing of grease from the cooking exhaust and makes the degreaser unit more ineffective. In addition, when the UV-C sources (i.e. degreaser units) are positioned directly into a path of an air flow they may make the flowing area for the air flow smaller and the air flow may flow faster when passing the UV-C sources. Therefore, the UV-C sources have less time to radiate the air flow, and thus the extraction is again less effective. Less effective extraction may cause contaminating of the hood and ducts of kitchen canopy and may further cause fires and/or other damaging consequences, such as decrease in hygiene level i.e. conditions for bacteria population are more suitable and/or accumulated grease may fall onto food, working plane or kitchen utensil, vanes of an exhaust air fan may be contaminated with grease and thus the suction effect may go down and/or consumption of electricity may rice etc.

Therefore, it is important to position a degreaser unit so that it removes grease and other cooking exhaust effectively but contaminates as little as possible. This kind of degreaser unit may comprise at least one UV-C source that radiates essentially in all directions, however at least so that the radiant flux i.e. a solid angle of radiation will be at least 3π steradians, and the degreaser unit is positioned inside a kitchen hood, and on the side of a path of an air flow flowing through the kitchen hood into an exhaust air duct opening of the kitchen hood. This means that the degreaser unit is positioned on the side of the exhaust air duct opening so that the degreaser unit does not obstruct the air flow heading to the exhaust air duct; for example, the degreaser unit may be fixed on a wall surface or a ceiling surface of the kitchen hood. It should also be noted that the degreaser unit is fixed so close to the wall that it does reach the path of an air flow i.e. the degreaser unit is not in the main air flow, because it is arranged on the side of the opening of the exhaust air duct, not directly under them when seen from the direction of an exhaust system producing cooking exhaust. However, the degreaser unit is fixed close to the wall, but not on the wall. There is a gap between the wall and the degreaser unit so that the degreaser unit may radiate also towards the wall. In addition to solid angle of radiation of at least one ultraviolet-C source of the degreaser unit, the size of at least one ultraviolet-C source is such that it reaches its full radiating capacity in thirty minutes or less, for example, in 15 minutes.

When the surface is UV-C radiated, the influence time to cooking exhaust air flow is long enough i.e. the cooking exhaust air flow has an adequate exposure of ultraviolet-C radiation to split grease molecules into shorter grease molecule chains and/or into carbon dioxide and water. However, it is also possible that more than one degrease units are needed for radiating the air flow, for example, 2 to 10, for example, 3 or 4 or 5 or 6. The amount of degreaser units may depend on the power of their UV-C source, but also on the size of the kitchen hood. However, if a degreaser unit comprises more than one UV-C source, they are arranged so that the degreaser unit has as large radiant flux as possible.

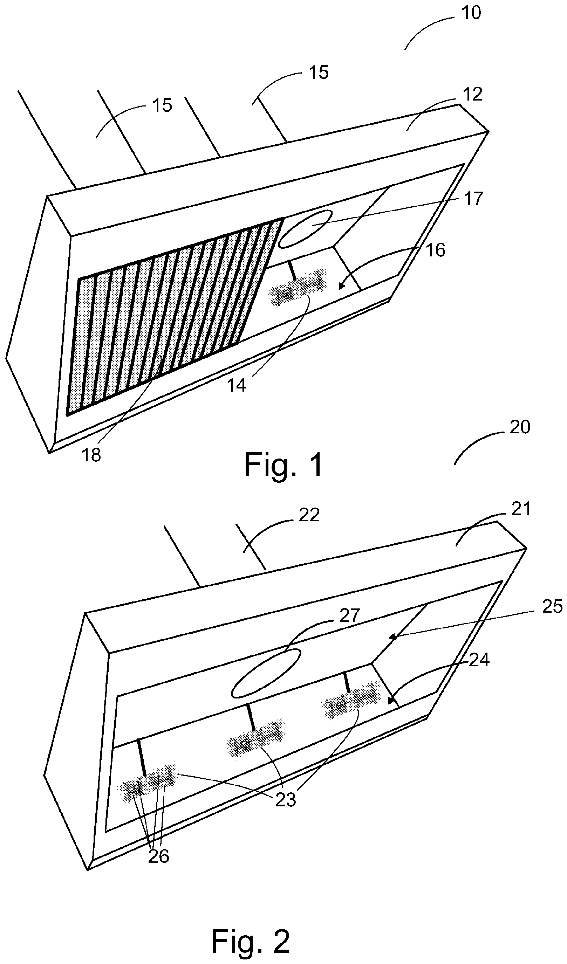

An example embodiment of the present invention and its potential advantages are understood by referring to figures 1 through 10 of the drawings.

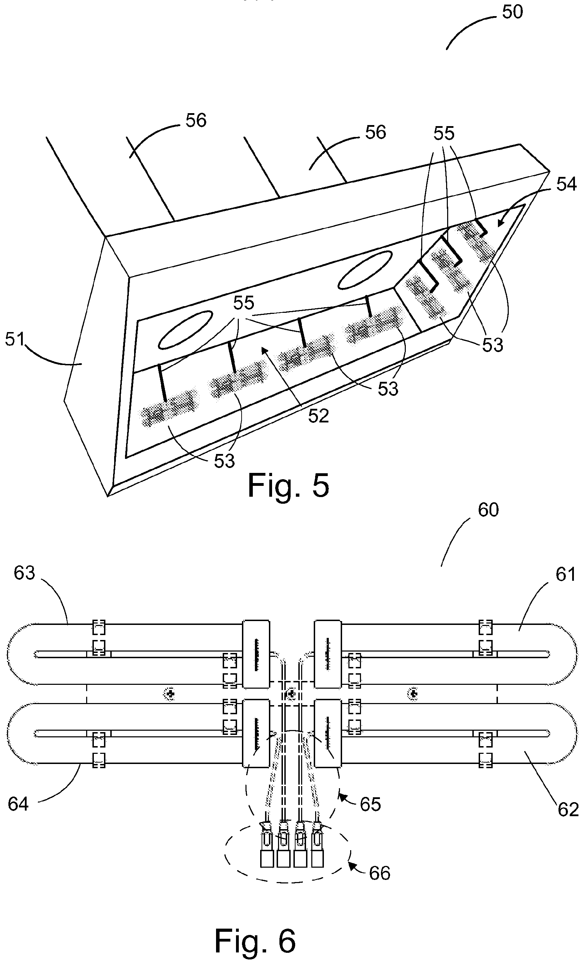

Fig. 1 shows a kitchen canopy 10 with a degreaser unit 14 according to an embodiment of the invention. In fig. 1 it is shown that the degreaser unit 14 is placed inside a hood 12. The degreaser unit 14 comprises four separate UV-C sources i.e. UV-C lamps (shown detailed in fig. 6). The degreaser unit 14 is arranged on the back wall 16 of the hood 12 on the side of the exhaust air duct opening 17 i.e. the degreaser unit 14 does not obstruct the air flow that is arranged to flow into exhaust air duct 15. In fig. 1 is also disclosed a grease filter 18 for filtering grease and for preventing the user from exposure to UV-C radiation and/or ozone.

It is possible that only one degreaser unit is adequate to radiate so effectively that the cooking exhaust does not contaminate the hood 12 or exhaust air ducts 15 of the kitchen canopy 10. But, it is also possible that there are more than one degreaser units, for example, if there are n exhaust air ducts, the amount of degreaser units may be n+1 or the amount of degreaser units may depend on the length of the hood, for example, two degreaser units for every longitudinal meter of the hood.

Fig. 2 shows a kitchen canopy 20 with degreaser units according to an embodiment of the invention. The kitchen canopy 20 comprises a hood 21 and an exhaust air duct 22. The exhaust air flow duct 22 is connected above the hood 21 for directing the air flow away from the hood 21. The degreaser units 23 each comprising four UV-C sources 26 are fixed on the side of the exhaust air duct opening 27 and on the back wall 24 of the hood 21 so that the surface of back wall 24 is radiated.

If the length of the back wall 24 and the hood 21 is 2m, distance between central points of degreaser units 23 may be, for example, 50-70cm. However, it may also be possible to use only two degreasers units 23 that are arranged on the back wall 24 or on the ceiling 25 on both sides of the duct 22.

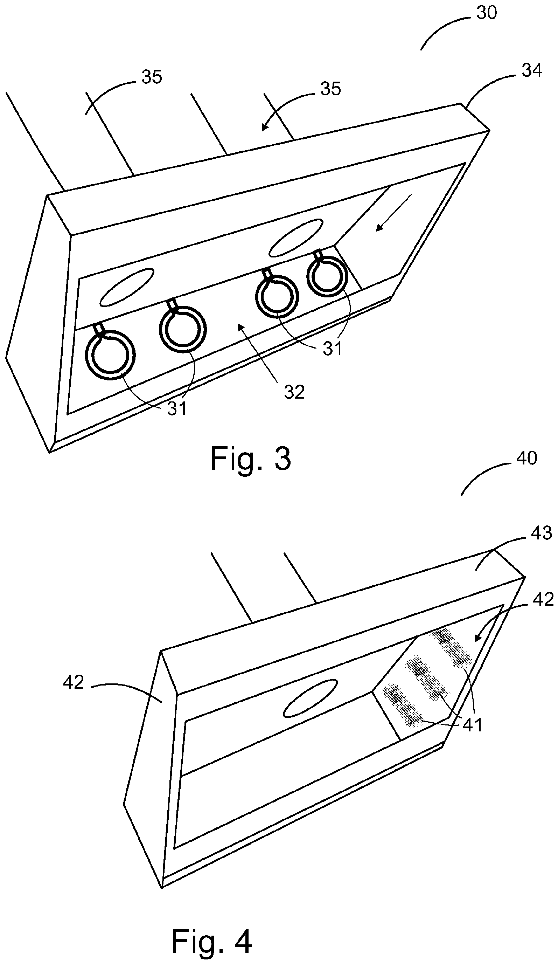

Fig. 3 shows a kitchen canopy 30 with degreaser units 31 according to an embodiment of the invention. In fig, 3 the degreaser units 31 each comprising one essentially O-shaped UV-C source are arranged on the back wall 32 of the hood 34. The kitchen canopy 30 comprises two exhaust air ducts 35, and degreaser units 31 are arranged on the back wall 32 (when seen from the front direction the kitchen canopy 30 (shown by arrow)) so that there are two degreaser units 31 for both ducts 35.

Fig. 4 shows a kitchen canopy 40 with degreaser units 41 according to an embodiment of the invention. The kitchen canopy 40 of fig. 4 is so short that it is adequate to arrange degreaser units 41 onto at least one side wall 42 of the hood 43 of the kitchen canopy 40 i.e. degreaser units 41 on the side wall have such a distance, for example, 15-30 cm, to the cooking exhaust flow that the flow is exposed adequately to ultraviolet-C radiation to split grease molecules into shorter grease molecule chains and/or into carbon dioxide and water. The adequate radiation efficiency may be gained by adequate power and/or amount of UV-C sources or degreaser units.

Fig. 5 shows a kitchen canopy 50 with degreaser units 53 according to an embodiment of the invention. The degreaser units 53 comprising four UV-C sources each are at a back wall 52 and at a side wall 54 of a hood 51 of the kitchen canopy 50. The amount of degreaser units 53 inside the hood 51 is not restricted. Wires 55 of UV-C sources of degreaser units 53 may be run through walls or ceiling of the hood 51. Wires 55 are connected to driving electronics of UV-C sources by plug connection outside the hood 51 (not shown). This structure ensures more reliable function for degreaser units 53, because there are no unsealed parts or connections inside the hot and moist hood 51.

However, it is also possible that wires 55 are connected to driving electronics of UV-C sources by plug connection inside the hood 51.

Fig. 6 shows a degreaser unit 60 according to an embodiment of the invention. The degreaser unit 60 of fig. 6 is formed from four separate u-shaped UV-C sources 61, 62, 63, 64 that are arranged so that the degreaser unit 60 radiates essentially in all directions around the degreaser unit 60, however at least so that the radiant flux i.e. a solid angle of radiation solid will be at will be at least 3π steradians. The separate UV-C sources 61, 62, 63, 64 may be, for example, small powered 15 W UV-C lamps. Together they form an effectively radiated degreaser unit of 60W that splits grease molecules into shorter grease molecule chains and/or into carbon dioxide and water. In addition, when small powered UV-C sources are used, they need less time to operate efficiently after turning on than regular UV-C sources with higher power. For example, when a degreaser unit comprises 4 15 watts UV-C sources, it took only 15 minutes to warm up. Whereas, a conventional degreaser unit with 75-100 watts source takes even 2 hours to warm up to operate efficiently. Longer waiting times mean higher costs. And if degreaser units do not operate efficiently and users start to produce cooking exhaust, the grease of cooking exhaust sticks onto surfaces of UV-C sources and they may get more inefficient.

Wires 65 of the UV-C sources 61, 62, 63, 64 are disclosed in fig. 6; suitable length for the wires 65 may be any length suitable for installation target, for example, long enough to be connected outside the hood of the kitchen canopy, for example, 1,5 meters, or if needed, inside the hood. Connectors 66 of the UV-C sources 61, 62, 63, 64 are fixed to the wires 65. Connectors 66 may be, for example, fast coupling elements or any other elements suitable electrical connections.

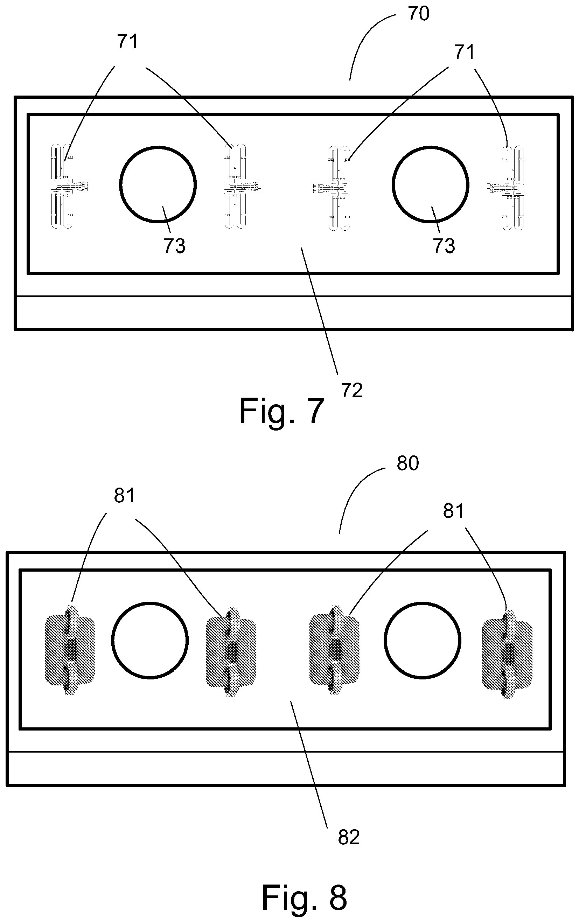

Fig. 7 shows a hood 70 of a kitchen canopy with degreaser units from below according to an embodiment of the invention. The hood 70 is 2 meters long, wherein the distance between central points of degreaser units 71 with UV-C sources is approximately 50 cm. Degreaser units 71 are fixed to the ceiling 72 of the hood 70 on the sides of the exhaust air duct openings 73. Degreaser units 71 are formed from four separate u-shaped UV-C sources.

Fig. 8 shows a hood 80 of a kitchen canopy with four degreaser units from below according to an embodiment of the invention. Degreaser units 81 are fixed to the ceiling 82 of the hood 80. Each degreaser unit 81 comprises one-pieced gentle rectangular UV-C source with two metal parts suitable for connecting the UV-C source to driving electronics.

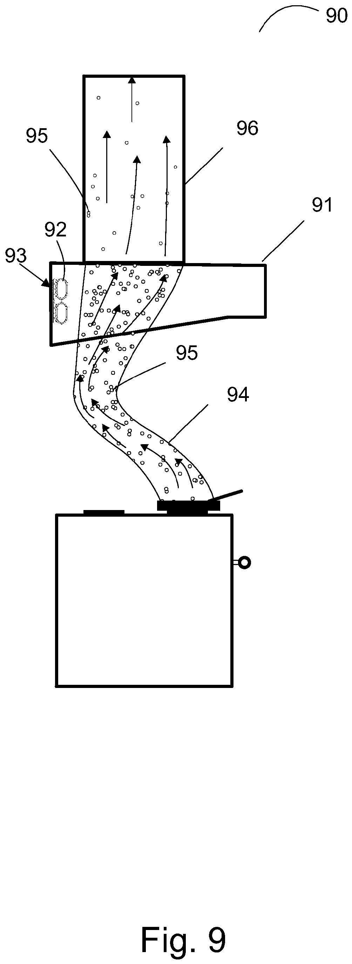

Fig. 9 shows a kitchen canopy 90 with a degreaser unit according to an embodiment of the invention shown from a side in its environment of use. A hood 91 of the kitchen canopy 90 comprises degreaser units 92 on its back wall 93. In fig. 9 it is clearly disclosed that degreaser unit 92 are not in a path of a cooking exhaust air flow 94. The direct air flow 94 passes the degreaser unit 92 at some distance and the degreaser unit 92 radiates the air flow 94 so that the grease molecules 95, grease particles, are at least partially extracted from the air flow 94. This can be seen from the figure, wherein the amount of grease molecules 95 in the air flow 94 is much less inside an exhaust air duct 96 of the kitchen canopy 90 than inside the hood 91. The flowing direction of the air flow 94 is indicated by arrows. However, it is possible that some part of the air reaches the degreaser unit 92, for example, due to turbulence, but most of the air flow 94 passes it on its way through the hood 91 into the exhaust air duct 96.

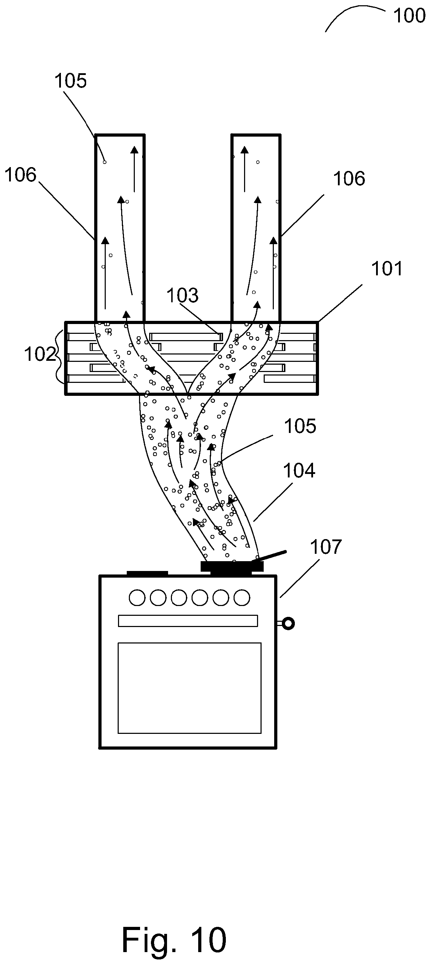

Fig. 10 shows a kitchen canopy 100 with a degreaser unit 102 according to an embodiment of the invention shown from the front side in its environment of use. A hood 101 of the kitchen canopy 100 comprises degreaser unit 102 with several elongated UV-C sources on its back wall 103. UV-C sources are regular fluorescent shaped sources. Even if one UV-C source of the degreaser unit 102 may not have such a wide radiant flux as, for example, UV-C sources of the degreaser unit of fig. 6, UV-C sources of the degreaser unit 102 are arranged such that they are imbricated and arranged such that they could illuminate the back wall 103 and their common solid angle of said radiation is at least 2π steradians. Size i.e. length of imbricated UV-C sources can be arranged such that they reach their full radiating capacity in thirty minutes or less. In addition, UV-C sources are not in a direct air flow 104, because they are arrange on the side of the openings of exhaust air ducts 106 i.e. they are not directly under them, when seen from the direction of an exhaust system producing cooking exhaust. Thus the main part of the air flow 104 passes in front of the UV-C sources at some distance and the UV-C sources radiate the air flow 104 so that the grease molecules 105, grease particles, are at least partially extracted from the air flow 104. This can be seen from the figure 10, wherein the amount of grease molecules 105 in the air flow 104 is much less inside both exhaust air ducts 106 of the kitchen canopy 100 than inside the hood 101. The flowing direction of the air flow 104 is indicated by arrows. The amount of elongated UV-C sources may depend on their size and the size of the hood. In some cases, two imbricated sources may be enough.

It should also be noted that because of more efficient extraction of grease molecules by degreaser units according to the invention, it is possible to use less powered UV-C sources in degreaser units, which reduces power costs and makes the current invention cheaper to use.

It is obvious that the present invention is not limited solely to the above-presented embodiments, but it can be modified within the scope of the appended claims.

## Claims

1. A kitchen canopy comprising a hood (12), an exhaust air flow duct (15, 22) that is connected to said hood (12, 21) and at least one degreaser unit (14, 23) for removing grease from an air flow inside the kitchen canopy (10, 20) that is fixed inside the hood (12, 21) on a side of an opening (17, 27) of said exhaust air flow duct (15, 22) and on the side of a path of the air flow arranged to flow inside the kitchen canopy (10, 20) so that the air flow is not obstructed, and wherein said degreaser unit (14, 23) comprises at least one ultraviolet source (26) for generating ultraviolet radiation, and wherein the solid angle of said radiation by which the air flow is radiated is at least 3π steradians.

2. A kitchen canopy according to claim 1, wherein said at least one degreaser unit (14, 23, 53, 71, 81) comprises four u-shaped ultraviolet-C sources, a one-pieced circular ultraviolet-C source, at least two imbricated and elongated UV-C sources or one-pieced rectangular UV-C source.

3. A kitchen canopy according to claim 1 or 2, wherein said at least one degreaser unit (14, 23) is fixed to a back wall (16, 24) of the hood (12, 21).

4. A kitchen canopy according to claim 1, 2 or 3, wherein said at least one degreaser unit (53, 71, 81) is fixed to a ceiling (72, 82) or a side wall (54) of the hood (51, 70, 80).

5. A kitchen canopy according to any of the claims 1 to 4, wherein said at least one ultraviolet source (26) further generates OH-radicals for removing impurities from the air flow.

6. A kitchen canopy according to any of the claims 1 to 5, wherein wires of said at least one degreaser unit (14, 23, 53, 71, 81) are suitable to run through wall or ceiling of the kitchen canopy (10, 20, 30, 40, 50) and connected to driving electronics outside the hood (12, 21, 34, 43, 51).

## Patentansprüche

1. Eine Küchen-Dunstabzugshaube mit einer Verkleidung (12), einer Abluftströmungsleitung (15, 22), die mit der Verkleidung (12, 21) verbunden ist, und mindestens einer Entfettungseinheit (14, 23) zum Entfernen von Fett aus einem Luftstrom in der Küchen-Dunstabzugshaube (10, 20), die in der Verkleidung (12, 21) an einer Seite einer Öffnung (17, 27) der Abluftströmungsleitung (15, 22) und an der Seite eines Weges des Luftstroms befestigt ist, der angeordnet ist, um innerhalb der Küchen-Dunstabzugshaube (10, 20) so zu strömen, dass der Luftstrom nicht behindert wird, und wobei die Entfettungseinheit (14, 23) mindestens eine Ultraviolettquelle (26) zum Erzeugen von Ultraviolettstrahlung aufweist, und wobei der Raumwinkel der Strahlung, über den der Luftstrom abgestrahlt wird, mindestens 3π Steradiant beträgt.

2. Küchen-Dunstabzugshaube gemäß Anspruch 1, wobei die mindestens eine Entfettungseinheit (14, 23, 53, 71, 81) vier u-förmige Ultraviolett-C-Quellen, eine einteilige kreisförmige Ultraviolett-C-Quelle, mindestens zwei schuppenförmig übereinander liegende und längliche UV-C-Quellen oder eine einteilige rechteckige UV-C-Quelle aufweist.

3. Küchen-Dunstabzugshaube gemäß Anspruch 1 oder 2, wobei die mindestens eine Entfettungseinheit (14, 23) an einer Rückwand (16, 24) der Verkleidung (12, 21) befestigt ist.

4. Küchen-Dunstabzugshaube gemäß Anspruch 1, 2 oder 3, wobei die mindestens eine Entfettungseinheit (53, 71, 81) an einer Decke (72, 82) oder einer Seitenwand (54) der Verkleidung (51, 70, 80) befestigt ist.

5. Küchen-Dunstabzugshaube gemäß einem der Ansprüche 1 bis 4, wobei die mindestens eine Ultraviolettquelle (26) darüber hinaus OH-Radikale zum Entfernen von Verunreinigungen aus dem Luftstrom erzeugt.

6. Küchen-Dunstabzugshaube gemäß einem der Ansprüche 1 bis 5, wobei Drähte der mindestens einen Entfettungseinheit (14, 23, 53, 71, 81) ausgestaltet sind, um durch die Wand oder Decke der Küchen-Dunstabzugshaube (10, 20, 30, 40, 50) zu verlaufen und mit der Antriebselektronik außerhalb der Verkleidung (12, 21, 34, 43, 51) verbunden sind.

## Revendications

1. Hotte de cuisine comprenant un caisson (12), un conduit d'évacuation du flux d'air (15, 22) raccordé audit caisson (12, 21) et au moins une unité de dégraissage (14, 23), destinée à éliminer la graisse du flux d'air à l'intérieur de la hotte de cuisine (10, 20), qui est fixée à l'intérieur du caisson (12, 21) sur un côté de l'ouverture (17, 27) dudit conduit de flux d'air d'évacuation (15, 22) et sur le côté du trajet du flux d'air disposé pour s'écouler à l'intérieur de la hotte de cuisine (10, 20) de manière que le flux d'air ne rencontre pas d'obstacle, et dans laquelle ladite unité de dégraissage (14, 23) comprend au moins une source ultraviolette (26) produisant un rayonnement ultraviolet, et dans laquelle l'angle solide dudit rayonnement par lequel le flux d'air est irradié est d'au moins 3π stéradians.

2. Hotte de cuisine selon la revendication 1, dans laquelle ladite au moins une unité de dégraissage (14, 23, 53, 71, 81) comprend quatre sources ultraviolettes C en U, une source ultraviolette C circulaire d'une pièce, au moins deux sources UVC imbriquées et allongées ou une source UVC rectangulaire d'une pièce.

3. Hotte de cuisine selon la revendication 1 ou 2, dans laquelle ladite au moins une unité de dégraissage (14, 23) est fixée à une paroi arrière (16, 24) du caisson (12, 21).

4. Hotte de cuisine selon la revendication 1, 2 ou 3, dans laquelle ladite au moins une unité de dégraissage (53, 71, 81) est fixée à un plafond (72, 82) ou à une paroi latérale (54) du caisson (51, 70, 80).

5. Hotte de cuisine selon l'une quelconque des revendications 1 à 4, dans laquelle ladite au moins une source ultraviolette (26) produit en outre des radicaux OH destinés à éliminer les impuretés du flux d'air.

6. Hotte de cuisine selon l'une quelconque des revendications 1 à 5, dans laquelle les fils de la au moins une unité de dégraissage (14, 23, 53, 71, 81) conviennent pour traverser la paroi ou le plafond de la hotte de cuisine (10, 20, 30, 40, 50) et sont raccordés à un équipement électronique de commande à l'extérieur du caisson (12, 21, 34, 43, 51).
